# FASCICULE DE BREVET EUROPEEN

(11) **EP 2 964 947 B1**
(45) Date de publication et mention de la délivrance du brevet: **12.12.2018**
(21) Numéro de dépôt: 14718652.2
(22) Date de dépôt: 04.03.2014
(51) Int. Cl.: F02K 9/86

(54) **DISPOSITIF DE MODULATION DE SECTION D'EJECTION DE GAZ**
VORRICHTUNG ZUR MODULATION EINES GASAUSSTOSSABSCHNITTS
DEVICE FOR MODULATING A GAS EJECTION SECTION

(30) Priorité: 07.03.2013 FR 1300515
(43) Date de publication de la demande: 13.01.2016
(73) Titulaire: ARIANEGROUP SAS, 75015 Paris (FR)
(72) Inventeur: CLERMONT, Mathieu, F-33680 Saumos (FR); REMIGI, Alain, F-33610 Cestas (FR); LARRIEU, Jean-Michel, F-33460 Macau (FR); MARLIN, Philippe, F-33290 Le Pian Medoc (FR)
(74) Mandataire: Desormiere, Pierre-Louis
(86) Numéro de dépôt international: PCT/FR2014/050485
(87) Numéro de publication internationale: WO 2014/135789

(56) Documents cités:
- FR-A1- 2 740 105
- GB-A- 2 156 290
- US-A- 2 583 570
- US-A- 5 491 973

## Description

### Arrière-plan de l'invention

La présente invention se rapporte au domaine général des propulseurs ou moteurs-fusées destinés à délivrer une poussée pour le pilotage d'engins aérospatiaux tels que des missiles, des lanceurs ou encore des satellites, en utilisant le principe de propulsion par réaction ou par éjection de gaz. Elle vise plus précisément, mais non exclusivement, les tuyères à divergent fixe équipant des propulseurs à propergol solide.

Un propulseur à propergol solide est principalement constitué d'une enveloppe renfermant un bloc de poudre (propergol), d'un allumeur et d'une tuyère à divergent fixe. Le bloc de poudre est percé par un canal situé dans l'axe du propulseur qui sert de chambre de combustion. L'allumeur met le feu à la poudre à une extrémité de l'enveloppe et la combustion du propergol se propage de l'avant vers l'arrière du propulseur. La poudre brûle à une vitesse prédéfinie en produisant des gaz de combustion qui sont expulsés par la tuyère.

La section de col de la tuyère permet de réguler la combustion du bloc de poudre de manière à maintenir la pression souhaitée dans la chambre de combustion tout en produisant la poussée attendue. Aussi, dans le cas d'un propulseur délivrant une poussée à débit unique, la section de col de la tuyère est unique et prédéterminée en fonction du niveau de poussée souhaité.

Cependant, le recours à une section de col unique n'est pas adapté à un propulseur ayant deux régimes de fonctionnement (typiquement un fonctionnement à haut débit et un fonctionnement à bas débit).

Pour pallier un tel inconvénient, il est connu de munir la tuyère d'une section de col variable. En pratique, un pointeau mobile en translation est logé à l'intérieur de la tuyère. La position de ce pointeau dans l'écoulement des gaz de combustion permet de déterminer la section de passage des gaz qui sortent de la tuyère et ainsi d'ajuster la section d'éjection des gaz au régime de fonctionnement du propulseur. Un dispositif de modulation de section d'éjection de gaz dans une tuyère est décrit dans le document US 5 491 973. Le document FR 2 740 105 décrit un obturateur pour tuyère.

Cependant, les systèmes de positionnement associés au pointeau mobile sont des systèmes actifs nécessitant une source d'énergie externe pour leur fonctionnement, ce qui complexifie la réalisation du dispositif de modulation de section d'éjection et augmente les risques de panne ou de fonctionnement défectueux du dispositif. Or, il existe un besoin pour réaliser sans source d'énergie externe une modulation de section d'éjection dans une tuyère de manière à faire transiter les gaz de combustion par la section d'éjection principale de la tuyère lors d'une phase de fonctionnement à un niveau de pression élevé dans le propulseur (correspondant à une phase ou régime de fonctionnement à haut débit) puis, lors d'une phase de fonctionnement à un niveau de pression plus faible dans le propulseur (correspondant à une phase ou un régime de fonctionnement à bas-débit), à faire transiter ces gaz par une section d'éjection secondaire positionnée dans la tuyère, et ce afin d'optimiser le coefficient de poussée dans les différentes phases de fonctionnement (haut-débit et bas-débit).

### Objet et résumé de l'invention

Ce but est atteint grâce à un dispositif conformément à la revendication 1 de modulation de section d'éjection de gaz destiné à être placé à l'intérieur d'une tuyère en amont du col de ladite tuyère, le dispositif de modulation comprenant un organe d'obturation partiel du col de tuyère, un guide de commande de l'organe d'obturation, un piston principal et un piston d'armement,
le guide de commande de l'organe d'obturation étant mobile entre une position de rétractation dans laquelle l'élément d'obturation partiel est maintenu à distance du col de tuyère et une position d'obturation dans laquelle l'élément d'obturation partiel est en contact avec le col de tuyère,
le piston d'armement étant mobile entre une position de repos dans laquelle le mouvement du piston principal est verrouillé et une position d'armement dans laquelle le mouvement du piston principal est déverrouillé, ledit piston d'armement se déplaçant de la position de repos à la position d'armement lorsque la pression dans le dispositif de modulation atteint une première valeur prédéterminée
le piston principal étant mobile entre une première position dans laquelle le mouvement du guide de commande de l'organe d'obturation est verrouillé dans la position de rétractation et une deuxième position dans laquelle le mouvement du guide de commande de l'organe d'obturation est déverrouillé, le piston principal se déplaçant de la première position à la deuxième position lorsque le piston d'armement est dans sa position d'armement et lorsque la pression dans le dispositif de modulation atteint une deuxième valeur prédéterminée inférieure à la première valeur prédéterminée.

Le dispositif de modulation de section d'éjection de gaz permet de définir deux modes de fonctionnement de la tuyère, à savoir un premier mode de fonctionnement à haut débit dans lequel l'organe d'obturation partiel est en retrait axial par rapport au col de la tuyère et un second mode de fonctionnement à bas débit dans lequel l'organe d'obturation partiel est en butée axiale contre le col. Dans le premier mode de fonctionnement, la section de passage des gaz de combustion qui sortent de la tuyère est maximale. Dans le second mode de fonctionnement, la section de passage des gaz de combustion est réduite aux seuls passages ménagés dans l'organe d'obturation partiel. Ainsi, le dispositif de modulation de l'invention permet d'optimiser le coefficient de poussée à différentes phases de fonctionnement d'un propulseur correspondant à différents niveaux de pression dans celui-ci.

En outre, l'actionnement et le positionnement de l'élément d'obturation partiel sur le col de tuyère sont entièrement réalisés de manière passive, c'est-à-dire sans utiliser de source d'énergie externe, seule la pression des gaz d'éjection dans la tuyère étant utilisée pour armer et déclencher le dispositif de modulation de section d'éjection des gaz.

Selon un premier aspect du dispositif de l'invention, celui-ci comprend un ressort de rappel pour maintenir le piston d'armement dans sa position de repos, le ressort de rappel présentant une raideur déterminée de manière à ce que ledit ressort se comprime lorsque la pression dans le dispositif de modulation atteint la première valeur prédéterminée.

Selon un deuxième aspect du dispositif de l'invention, celui-ci comprend un ressort de poussée maintenu en compression contre le piston principal, ledit ressort de poussée exerçant sur le piston principal une force de poussée supérieure à l'effort de pression exercé sur ledit piston principal lorsque la pression dans le dispositif de modulation atteint la deuxième valeur prédéterminée.

Selon un troisième aspect du module de l'invention, celui-ci comprend une ou plusieurs billes placées autour de la paroi externe du piston d'armement, lesdites billes étant maintenues dans un logement s'étendant à la fois dans le piston principal et dans une chemise fixe entourant ledit piston principal lorsque le piston d'armement est dans sa position de repos, le piston d'armement comportant une ou plusieurs cavités aptes à loger partiellement la ou les billes lorsque ledit piston d'armement est dans sa position d'armement de manière à déverrouiller le mouvement du piston principal.

Selon un quatrième aspect du module de l'invention, celui-ci comprend une ou plusieurs billes placées autour de la paroi externe du piston principal, lesdites billes étant maintenues dans un logement s'étendant à la fois dans une chemise fixe entourant le piston principal et dans le guide de commande de l'organe d'obturation lorsque le piston principal est dans la première position, le piston principal comportant une ou plusieurs cavités aptes à loger partiellement la ou les billes lorsque ledit piston principal est dans sa deuxième position de manière à déverrouiller le mouvement du guide de commande de l'organe d'obturation.

Selon un cinquième aspect du module de l'invention, le piston principal est apte à pousser le guide de commande de l'organe d'obturation vers sa position d'obturation lorsque le piston d'armement est dans sa position d'armement et lorsque la pression dans le dispositif de modulation atteint une deuxième valeur prédéterminée inférieure à la première valeur prédéterminée.

Selon un sixième aspect du module de l'invention, le guide de commande de l'organe d'obturation est monté sur une chemise du piston principal par une liaison coulissante.

Selon un septième aspect du module de l'invention, le guide de commande de l'organe d'obturation est monté sur une chemise du piston principal par une liaison vissée à double filet.

L'invention a également pour objet une tuyère à section de col variable comprenant un col de tuyère et un divergent caractérisée en ce qu'elle comprend en outre un dispositif de modulation de section d'éjection de gaz selon l'invention, ledit dispositif de modulation étant placé dans la tuyère en amont dudit col de tuyère.

L'invention a encore pour objet un moteur-fusée ou propulseur comprenant une tuyère à section de col variable telle que définie ci-avant.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- les figures 1A à 1D sont des vues schématiques en coupe longitudinale d'un moteur-fusée propulseur équipé d'un dispositif de modulation de section d'éjection de gaz conformément à un mode de réalisation de l'invention ;
- les figures 2A à 2D sont des vues schématiques en coupe longitudinale d'un dispositif de modulation de section d'éjection de gaz conformément à un autre mode de réalisation de l'invention.

### Description détaillée de l'invention

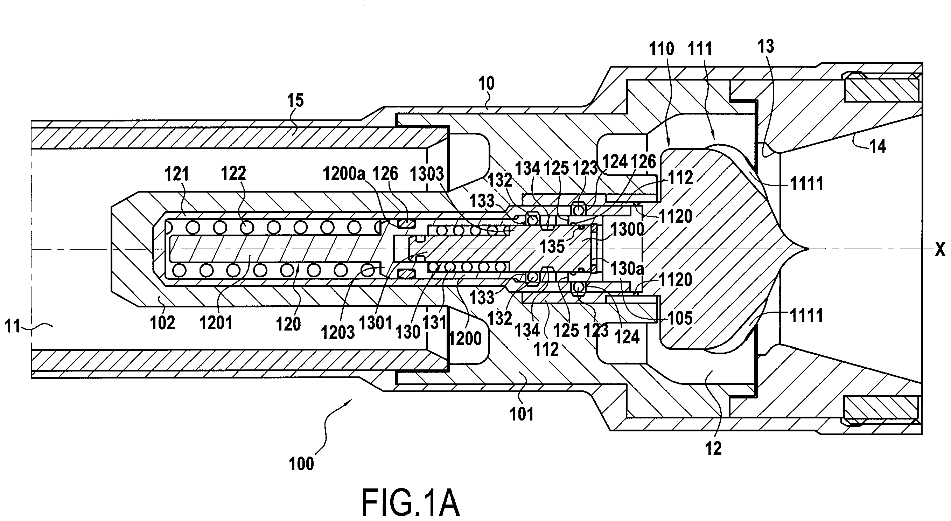

La figure 1A illustre schématiquement en coupe longitudinale la partie arrière d'un moteur-fusée comprenant une enveloppe 10 de révolution entourant une chambre de combustion 11 dans laquelle est logé en amont un bloc de propergol solide (non représenté). La chambre 11 s'ouvre à travers le fond arrière de l'enveloppe en amont d'une tuyère 12 comprenant un col de tuyère 13 qui forme la section d'éjection principale et un divergent 14 qui n'est représenté que partiellement sur la figure 1A. Un revêtement intérieur de protection thermique et d'étanchéité 15 peut être formé sur la paroi interne de l'enveloppe 10.

Conformément à l'invention, un dispositif de modulation de section d'éjection de gaz 100 est disposé à l'intérieur de l'enveloppe 10 en amont du col de tuyère 13. Dans l'exemple décrit ici, le maintien en position du dispositif de modulation 100 est assuré par deux bras 101 fixés sur la paroi interne de l'enveloppe 10. Les bras 101 sont disposés à 180° l'un de l'autre, le reste de l'espace circonférentielle présent autour du dispositif de modulation étant laissé libre pour permettre aux gaz issus de la chambre de combustion 11 de s'écouler vers le col de tuyère 13. Le dispositif de modulation 100 comprend un carter 102 qui s'étend axialement dans l'enveloppe 10 et qui est solidaire des bras de maintien 101.

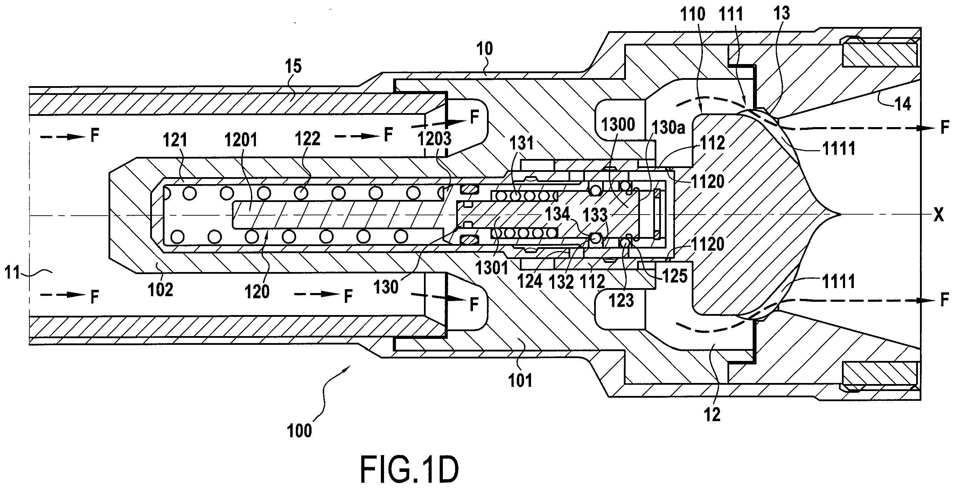

Le dispositif de modulation de section d'éjection de gaz 100 comprend un système d'obturation 110 formé ici d'un pointeau 111 apte à venir en butée axiale contre le col de tuyère 13 formant siège et d'un guide axial de commande 112 du pointeau 111. Dans l'exemple décrit ici, le guide axial de commande 112 est formé par un élément cylindrique connecté à l'extrémité amont du pointeau 111. Toujours dans l'exemple décrit ici, le pointeau 111 est formé d'une pièce axisymétrique présentant une forme générale renflée ou en bulbe comportant sur son extrémité aval des rainures axiales 1111. Ainsi, lorsque le pointeau 111 est en butée axiale contre le col de tuyère 13, les gaz issus de la chambre de combustion transitent en amont du col de tuyère par les rainures axiales 1111 et sont ensuite éjectés par le divergent 14, les rainures 1111 formant la section d'éjection secondaire (figure 1D). Lorsque le pointeau 111 est dans sa position rétractée (figure 1A), les gaz de combustion transitent par la section d'éjection principale, c'est-à-dire circulent normalement par le col de tuyère 13 et sont éjectés directement par le divergent 14.

Le dispositif de modulation 100 comprend un piston principal 120 logé dans une chemise 121, le piston principal 120 comportant une partie inférieure 1200 creuse et une partie supérieure 1201 en forme de tige autour de laquelle est disposé un ressort de poussée 122 en contact, d'une part, avec le fond de la chemise 121 et, d'autre part, avec un épaulement 1203 ménagé au niveau de la portion jointive entre la partie inférieur 1200 et la partie supérieure 1201. L'étanchéité entre la partie inférieure 1200 du piston principal et la chemise 1201 est assurée par un joint 126 placé dans un logement 1200a ménagé dans la partie inférieure 1200 du piston principal 120.

Le dispositif de modulation 100 comprend en outre un piston d'armement 130 logé dans la partie inférieure creuse 1200 du piston principal 120 qui forme une chemise pour le piston d'armement 130. Le piston d'armement comporte une partie inférieure 1300 et une partie supérieure 1301 en forme de tige autour de laquelle est disposé un ressort de rappel 131 en contact, d'une part, avec la partie inférieure creuse 1200 et, d'autre part, avec un épaulement 1303 ménagé au niveau de la portion jointive entre la partie inférieure 1300 et la partie supérieure 1301.

Des premières billes 123 sont placées autour du piston principal dans des logements 124 qui s'étendent à travers la chemise 121 et dans une portion du guide axial de commande 112 du pointeau 111. Le piston principal 120 comprend des cavités 125 destinées à recevoir les billes 123 lors du mouvement du piston principal comme décrit ci-après en détail.

Des deuxièmes billes 132 sont placées autour du piston d'armement 130 dans des logements 133 qui s'étendent dans la partie inférieure 1200 du piston principal 120 et dans une portion de la chemise 121. Le piston d'armement comprend des cavités 134 destinées à recevoir partiellement les billes 132 lors du mouvement du piston principal comme décrit ci-après en détail.

Le piston d'armement 130 est en outre doté d'un jonc précontraint 135 qui est destiné à se positionner dans une gorge 126 ménagée dans la partie inférieure 1200

On explique maintenant le fonctionnement du dispositif de modulation de section d'éjection de gaz 100 suivant les différentes phases d'utilisation du moteur-fusée.

Durant le stockage du moteur-fusée, le dispositif de modulation se trouve dans la configuration représentée en figure 1A, configuration dans laquelle le piston principal est immobilisé par la présence des deuxièmes billes 132 dans les logements 133, les billes 132 solidarisant dans cette configuration le piston principal 120 avec la chemise 121.

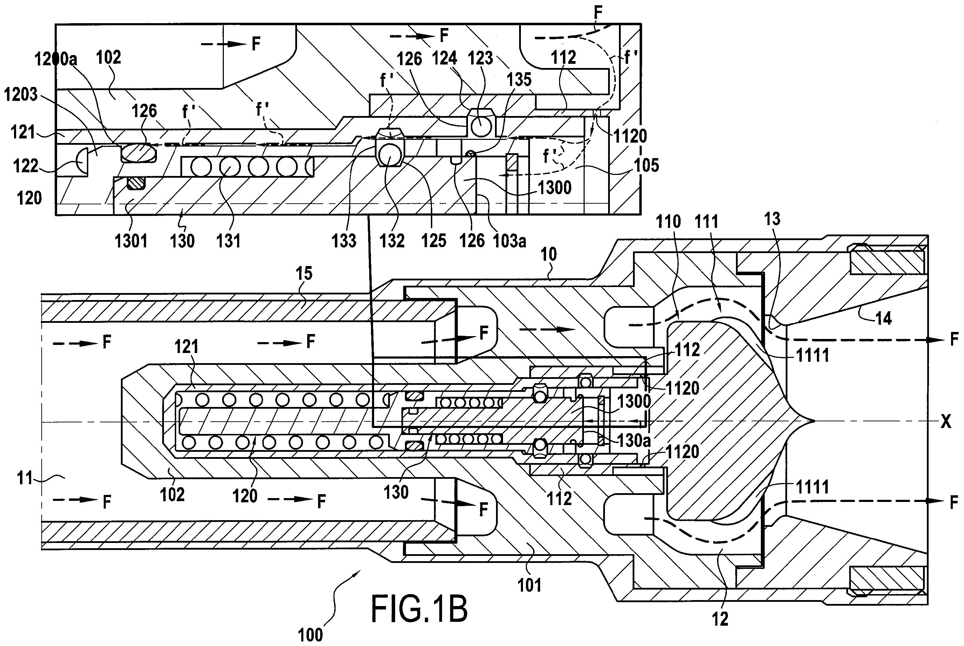

Durant une première phase de vol représentée en figure 1B, dite phase haut-débit de flux ou phase d'armement du dispositif de modulation de section d'éjection des gaz, le flux F des gaz d'éjection issus de la chambre de combustion 11 circule autour du dispositif de modulation 100 et transite par la section d'éjection principale formée par la tuyère 12 en passant autour du pointeau 111. Une fraction f' du débit du flux F est prélevée et amenée dans l'espace interne 105 du dispositif de modulation par des orifices 1120 ménagés dans le guide axial de commande 112. La fraction de débit f' entrant dans l'espace interne 105 pressurise la face arrière 130a du piston d'armement 130. Lorsque la pression dans l'espace 105, c'est-à-dire l'effort de pression exercé sur la face arrière du piston d'armement 130, devient supérieure à la force exercée en sens opposé par le ressort de rappel 131 sur le piston d'armement 130 combinée aux frottements, le piston d'armement se déplace axialement vers l'avant du dispositif de modulation de sorte que les billes 132 pénètrent partiellement dans les cavités 134 libérant ainsi le mouvement du piston principal 120 par rapport à la chemise 121. La raideur du ressort de rappel 131 est déterminée de manière à ce qu'il se comprime lorsque la pression dans le dispositif de modulation atteint une première valeur prédéterminée correspondant à la valeur de débit du flux F à partir de laquelle on souhaite armer le dispositif de modulation 100.

Le piston d'armement 130 est immobilisé en position avant par le jonc 135 qui a été introduit dans la gorge 126 lors du déplacement vers l'avant du piston d'armement. Le piston principal 120 reste plaqué vers l'avant par l'effort de pression exercé par la fraction f' du débit du flux F sur le joint 126 du piston principal. Le ressort de poussée 122 associé au piston principal est maintenu en compression contre celui-ci, ledit ressort de poussée exerçant sur le ressort principal une force de poussée inférieure à l'effort de pression exercé sur le joint 126 du piston principal lorsque la pression dans le dispositif de modulation est supérieure à une deuxième valeur prédéterminée, elle-même inférieure à la première valeur de pression prédéterminée.

Le dispositif de modulation 100 reste dans cette configuration tant que la pression dans le dispositif de modulation est supérieure à la deuxième valeur prédéterminée correspondant à la valeur de débit du flux F à partir de laquelle on souhaite moduler la section d'éjection des gaz.

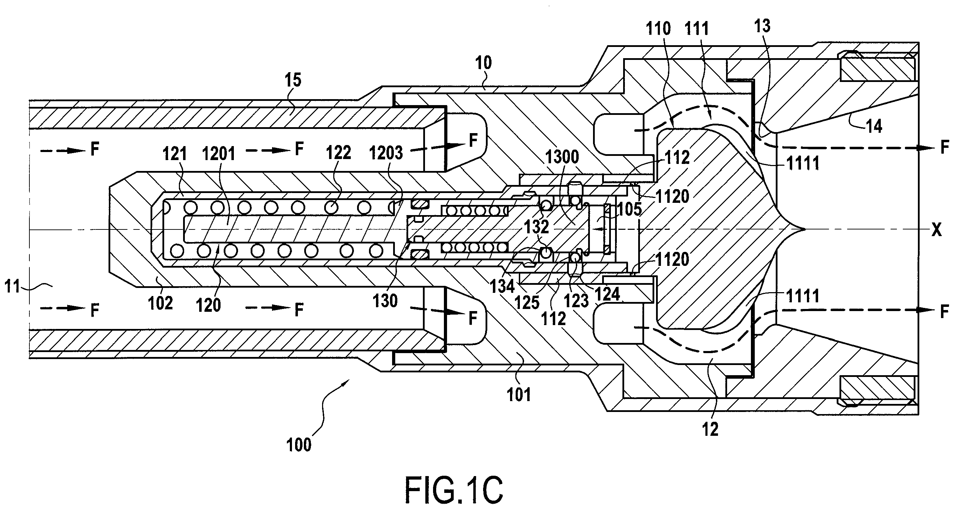

Lorsque la pression baisse dans le dispositif de modulation à la fin du fonctionnement à haut débit de sorte que le moteur-fusée entre alors dans une phase de fonctionnement bas-débit et que la pression dans le dispositif de modulation atteint la deuxième valeur prédéterminée, c'est-à-dire la valeur à partir de laquelle la force de poussée du ressort 122 devient supérieure à l'effort de pression exercé sur le joint 126 du piston principal, le piston principal 120 se translate vers l'arrière du dispositif de modulation permettant aux billes 123 de pénétrer entièrement dans les cavités 125 libérant ainsi le mouvement du guide axial de commande 112 du pointeau 111 par rapport à la chemise 121 comme représenté sur la figure 1C.

Une fois le guide axial de commande ainsi libéré, le piston principal vient se positionner en appui sur la partie avant du pointeau 111 et le pousser vers l'arrière. Le système d'obturation 110 se translate alors vers l'arrière sous l'effet combiné des forces aérodynamiques exercées par le débit du Flux F sur le pointeau 111 et de la poussée du piston principal 120 de manière à positionner le pointeau en butée sur le col de tuyère 13 comme sur la figure 1D. Dans cette configuration, le pointeau obstrue partiellement le passage défini par le col de tuyère, le flux F bas-débit transitant uniquement par la section d'éjection secondaire formée par les rainures axiales 1111.

Selon une variante de mise en oeuvre, le ressort de poussée du piston principal peut être remplacé par un dispositif pyrotechnique qui est apte à générer une poussée sur le piston principal. Dans ce cas, on utilise un retardateur pyrotechnique initié par les gaz de combustion et qui est calibré pour déclencher le mouvement du piston principal au moment du passage dans la phase de fonctionnement bas-débit.

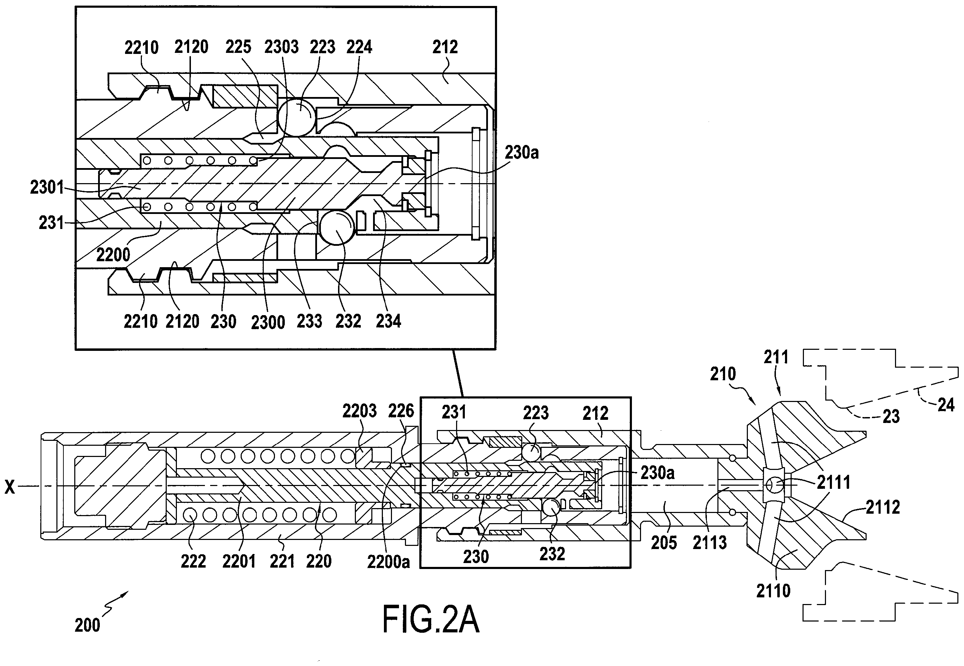

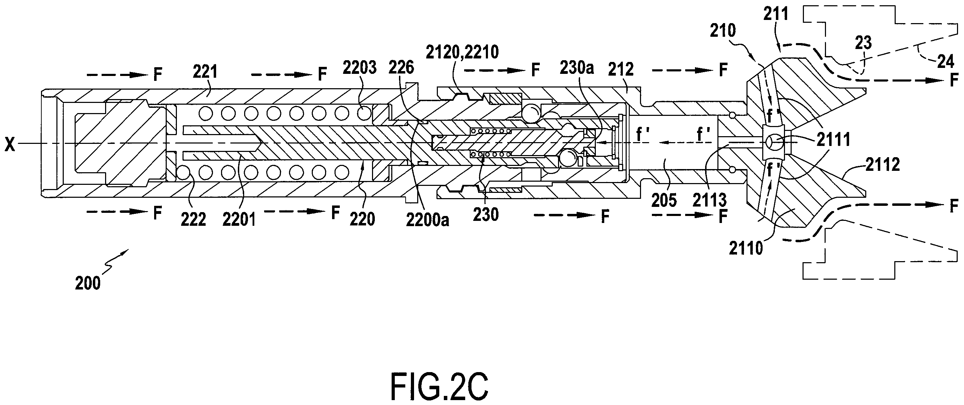

La figure 2A illustre schématiquement en coupe longitudinale un dispositif de modulation de section d'éjection de gaz 200 selon un autre mode de réalisation de l'invention qui est destiné à être disposé dans la partie arrière ou tuyère d'un moteur-fusée (non représenté sur la figure 2A) comme déjà décrit ci-avant. Le dispositif de modulation de section d'éjection de gaz 200 comprend un système d'obturation 210 formé ici d'un organe d'obturation partiel 211 apte à venir en butée axiale contre un col de tuyère 23 formant siège et s'ouvrant sur un divergent 24, et d'un guide axial de commande 212 de l'organe d'obturation partiel 211 formé par un élément cylindrique connecté à l'extrémité amont de l'organe d'obturation partiel 211. L'organe d'obturation partiel 211 est formé d'une pièce axisymétrique 2110 présentant une forme générale renflée ou en bulbe comportant des canaux internes 2111 débouchant, d'une part, sur la paroi externe de la pièce 2110 et, d'autre part, dans un divergent secondaire 2112 ménagé dans la partie aval de la pièce 2110. Ainsi, lorsque l'organe d'obturation partiel 211 est en butée axiale contre le col de tuyère 23, les gaz issus de la chambre de combustion transitent en amont du col de tuyère par les canaux interne 2111 et sont ensuite éjectés par le divergent secondaire 2112 (figure 2C). Lorsque l'organe d'obturation partiel est dans sa position rétractée (figure 2A), les gaz de combustion transitent par la section d'éjection principale formée par le col de tuyère 23 et le divergent 24. La pièce 2110 comporte également un canal interne 2113 reliant les canaux internes 2111 à un espace interne 205 du dispositif de modulation 200.

Le dispositif de modulation 200 comprend un piston principal 220 logé dans une chemise 221, le piston principal 220 comportant une partie inférieure 2200 creuse et une partie supérieure 2201 en forme de tige autour de laquelle est disposé un ressort de rappel 222 en contact, d'une part, avec le fond de la chemise 221 et, d'autre part, avec un épaulement 2203. L'étanchéité entre le piston principal 220 et la chemise 221 est assurée par un joint 226 placé dans un logement 2200a ménagé dans la partie inférieure 2200 du piston principal 220.

Le dispositif de modulation 200 comprend en outre un piston d'armement 230 logé dans la partie inférieure creuse 2200 du piston principal 220 qui forme une chemise pour le piston d'armement 230. Le piston d'armement comporte une partie inférieure 2300 et une partie supérieure 2301 en forme de tige autour de laquelle est disposé un ressort de rappel 231 en contact, d'une part, avec la partie inférieure creuse 2200 et, d'autre part, avec un épaulement 2303 ménagé au niveau de la portion jointive entre la partie inférieure 2300 et la partie supérieure 2301.

Des premières billes 223 sont placées autour du piston principal dans des logements 224 qui s'étendent à travers la chemise 221 et dans une portion du guide axial de commande 212 de l'organe d'obturation partiel 211. Le piston principal 220 comprend des cavités 225 destinées à recevoir partiellement les billes 223 lors du mouvement du piston principal comme décrit ci-après en détail.

Des deuxièmes billes 232 sont placées autour du piston d'armement 230 dans des logements 233 qui s'étendent dans la partie inférieure 2200 du piston principal 220 et dans une portion de la chemise 221. Le piston d'armement comprend des cavités 234 destinées à recevoir partiellement les billes 232 lors du mouvement du piston principal comme décrit ci-après en détail.

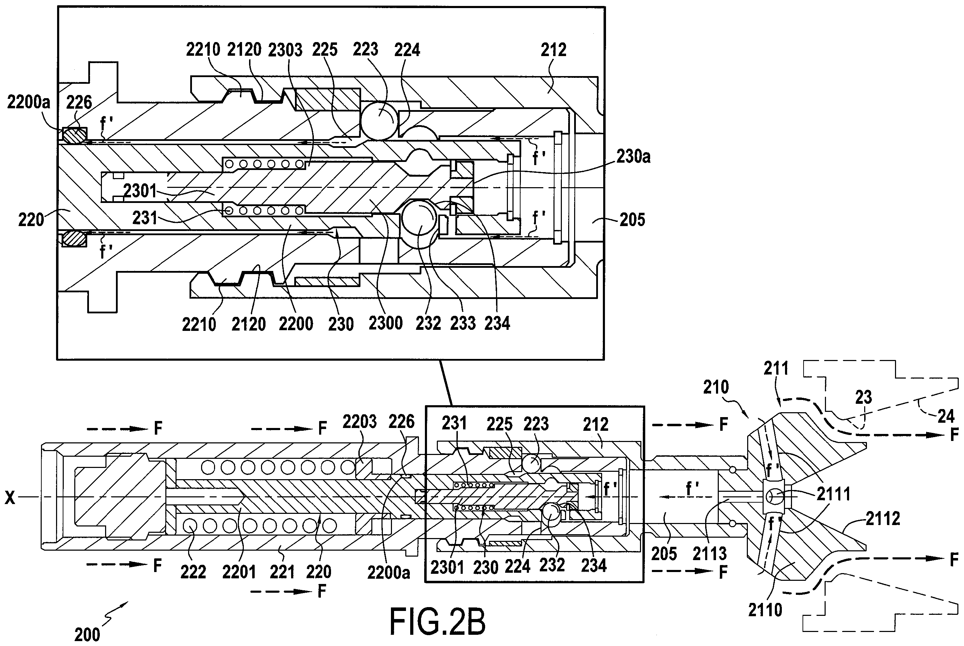

Le dispositif de modulation 200 diffère du dispositif de modulation décrit ci-avant en ce que le guide axial de commande 212 est fixé par vissage sur la chemise 221. Plus précisément, la chemise 221 comporte un filetage double filet 2210 tandis que le guide axial de commande 212 comporte un taraudage double filet 2120 correspondant. Le dévissage du guide axial de commande est bloqué par les billes 223 lorsque le dispositif de modulation 200 est dans les configurations représentées sur les figures 2A et 2B. En revanche, lorsque le dispositif de modulation 200 se trouve dans la configuration représentée sur la figure 2C, c'est-à-dire lorsque les billes 223 ont pénétré dans les cavités 225, le guide axial de commande est alors libre de se dévisser par rapport à la chemise 221 et de se translater vers l'arrière. L'utilisation d'un système d'attache à double filet permet la reprise d'efforts importants (typiquement de plusieurs kN) lors de la translation vers l'arrière du système d'obturation 210.

On explique maintenant le fonctionnement du dispositif de modulation de section d'éjection de gaz 200 suivant les différentes phases d'utilisation d'un moteur-fusée.

Durant le stockage du moteur-fusée, le dispositif de modulation se trouve dans la configuration représentée en figure 2A, configuration dans laquelle le piston principal est immobilisé par la présence des deuxièmes billes 232 dans les logements 233, les billes 232 solidarisant dans cette configuration le piston principal 220 avec la chemise 221.

Durant une première phase de vol représentée en figure 2B, dite phase haut-débit de flux ou phase d'armement du dispositif de modulation de section d'éjection des gaz, le flux F des gaz d'éjection issus de la chambre de combustion (non représentée sur la figure 2B) circule autour du dispositif de modulation 200 et transite par la section d'éjection principale en passant autour de l'organe d'obturation partiel 211. Une fraction f' du débit du flux F est prélevée par les canaux internes 2111 de la pièce axisymétrique 2110 de l'organe d'obturation partiel et amenée dans l'espace interne 205 du dispositif de modulation via le canal interne 2113. La fraction de débit f' entrant dans l'espace interne 205 pressurise la face arrière 230a du piston d'armement 230. Lorsque la pression dans l'espace 205, c'est-à-dire l'effort de pression exercé sur la face arrière du piston d'armement 230, devient supérieur à la force exercée en sens opposé par le ressort de rappel 231 sur le piston d'armement 230 combinée aux frottements, le piston d'armement se déplace axialement vers l'avant du dispositif de modulation de sorte que les billes 232 pénètrent partiellement dans les cavités 234 libérant ainsi le mouvement du piston principal 220 par rapport à la chemise 221. La raideur du ressort de rappel 231 est déterminée de manière à ce qu'il se comprime lorsque la pression dans le dispositif de modulation atteint une première valeur prédéterminée correspondant à la valeur de débit du flux F à partir de laquelle on souhaite armer le dispositif de modulation 200.

Le piston principal 220 reste plaqué vers l'avant par l'effort de pression exercé par la fraction f' du débit du flux F sur le joint 226 du piston principal. Le ressort de poussée 222 associé au piston principal est maintenu en compression contre celui-ci, ledit ressort de poussée exerçant sur le ressort principal une force de poussée inférieure à l'effort de pression exercé sur le joint 226 du piston principal lorsque la pression dans le dispositif de modulation est supérieure à une deuxième valeur prédéterminée, elle-même inférieure à la première valeur de pression prédéterminée.

Le dispositif de modulation 200 reste dans cette configuration tant que la pression dans le dispositif de modulation est supérieure à la deuxième valeur prédéterminée correspondant à la valeur de débit du flux F à partir de laquelle on souhaite moduler la section d'éjection des gaz.

Lorsque la pression baisse dans le dispositif de modulation à la fin du fonctionnement à haut débit de sorte que le moteur-fusée entre alors dans une phase bas-débit et que la pression dans le dispositif de modulation atteint la deuxième valeur prédéterminée, c'est-à-dire la valeur à partir de laquelle la force de poussée du ressort 222 devient supérieure à l'effort de pression exercé sur le joint 226 du piston principal, le piston principal 220 se translate vers l'arrière du dispositif de modulation permettant aux billes 223 de pénétrer dans les cavités 225 libérant ainsi le mouvement du guide axial de commande 212 de l'organe d'obturation partiel 211 par rapport à la chemise 221 comme représenté sur la figure 2C.

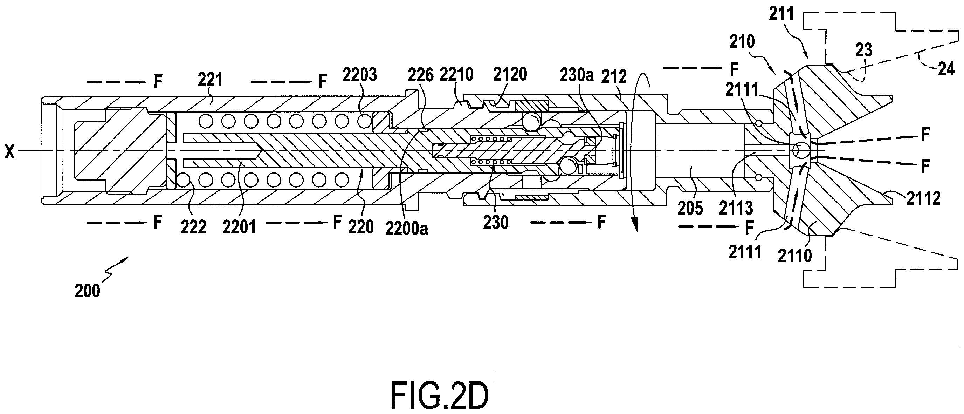

Une fois le guide axial de commande ainsi libéré, celui-ci se dévisse et se translate alors vers l'arrière sous l'effet des forces aérodynamiques exercées par le débit du Flux F sur l'organe d'obturation partiel 211 de manière à positionner l'organe d'obturation partiel en butée sur le col de tuyère 23 comme sur la figure 2D. Dans cette configuration, l'élément d'obturation partiel obstrue le passage défini par le col de tuyère, le flux F bas-débit transitant uniquement par la section d'éjection secondaire formée par les canaux internes 2111 et le divergent secondaire 2112.

Le dispositif de modulation de section d'éjection de gaz de l'invention peut être utilisé dans des moteurs-fusées ou lanceurs à propulsion solide (propergol solide), liquide (propergol liquide) ou hybride (propergols solide et liquide).

## Revendications

1. Dispositif de modulation de section d'éjection de gaz (100) destiné à être placé à l'intérieur d'une tuyère (12) d'un propulseur ou d'un moteur fusée en amont du col (13) de ladite tuyère, le dispositif de modulation comprenant un organe d'obturation partiel (111) du col de tuyère (13), un guide de commande (112) de l'organe d'obturation (111), un piston principal (120) et un piston d'armement (130),
le guide de commande (112) étant connecté à l'extrémité amont de l'organe d'obturation (111), le guide de commande étant mobile entre une position de rétractation et une position d'obturation,
le piston d'armement (130) étant logé dans une partie inférieure creuse (1200) du piston principal (120), ledit piston d'armement étant mobile entre une position de repos dans laquelle le mouvement du piston principal (120) est verrouillé et une position d'armement dans laquelle le mouvement du piston principal (120) est déverrouillé, ledit piston d'armement se déplaçant de la position de repos à la position d'armement lorsque la pression exercée sur la face arrière du piston d'armement atteint une première valeur prédéterminée
le piston principal (120) étant mobile entre une première position dans laquelle le mouvement du guide de commande (112) de l'organe d'obturation (111) est verrouillé dans la position de rétractation et une deuxième position dans laquelle le mouvement du guide de commande (112) de l'organe d'obturation (111) est déverrouillé, le piston principal (120) se déplaçant de la première position à la deuxième position lorsque le piston d'armement (130) est dans la position d'armement et lorsque la pression exercée sur le piston principal (120) atteint une deuxième valeur prédéterminée inférieure à la première valeur prédéterminée.

2. Dispositif selon la revendication 1, **caractérisé en ce qu'**il comprend un ressort de rappel (131) pour maintenir le piston d'armement (130) dans la position de repos, le ressort de rappel (131) présentant une raideur déterminée de manière à ce que ledit ressort se comprime lorsque la pression dans le dispositif de modulation atteint la première valeur prédéterminée.

3. Dispositif selon la revendication 1 ou 2, **caractérisé en ce qu'**il comprend un ressort de poussée (122) maintenu en compression contre le piston principal (120), ledit ressort de poussée exerçant sur le piston principal une force de poussée supérieure à l'effort de pression exercé sur ledit piston principal lorsque la pression dans le dispositif de modulation atteint la deuxième valeur prédéterminée.

4. Dispositif selon l'une quelconque des revendications 1 à 3, **caractérisé en ce qu'**il comprend une ou plusieurs billes (132) placées autour de la paroi externe du piston d'armement (130), lesdites billes étant maintenues dans un logement (133) s'étendant à la fois dans le piston principal (120) et dans une chemise fixe (121) entourant ledit piston principal lorsque le piston d'armement (130) est dans la position de repos et **en ce que** le piston d'armement (130) comporte une ou plusieurs cavités (134) aptes à loger partiellement la ou les billes (132) lorsque ledit piston d'armement est dans la position d'armement de manière à déverrouiller le mouvement du piston principal (120).

5. Dispositif selon l'une quelconque des revendications 1 à 4, **caractérisé en ce qu'**il comprend une ou plusieurs billes (123) placées autour de la paroi externe du piston principal (120), lesdites billes étant maintenues dans un logement (124) s'étendant à la fois dans une chemise fixe (121) entourant le piston principal (120) et dans le guide de commande (112) de l'organe d'obturation (111) lorsque le piston principal (120) est dans la première position et **en ce que** le piston principal (120) comporte une ou plusieurs cavités (125) aptes à loger partiellement la ou les billes (123) lorsque ledit piston principal est dans la deuxième position de manière à déverrouiller le mouvement du guide de commande (112) de l'organe d'obturation (111).

6. Dispositif selon l'une quelconque des revendications 1 à 5, **caractérisé en ce que** le piston principal (120) est apte à pousser le guide de commande (112) de l'organe d'obturation (111) vers sa position d'obturation lorsque le piston d'armement (130) est dans la position d'armement et lorsque la pression dans le dispositif de modulation atteint une deuxième valeur prédéterminée inférieure à la première valeur prédéterminée.

7. Dispositif selon l'une quelconque des revendications 1 à 6, **caractérisé en ce que** le guide de commande (112) de l'organe d'obturation (111) est monté sur une chemise (121) du piston principal (120) par une liaison coulissante.

8. Dispositif selon l'une quelconque des revendications 1 à 7, **caractérisé en ce que** le guide de commande (212) de l'organe d'obturation (211) est monté sur une chemise (221) du piston principal (220) par une liaison vissée à double filet.

9. Tuyère à section de col variable comprenant un col de tuyère (13) et un divergent (14) **caractérisée en ce qu'**elle comprend en outre un dispositif de modulation de section d'éjection de gaz (100) selon l'une quelconque des revendications 1 à 8, ledit dispositif de modulation étant placé dans la tuyère en amont dudit col de tuyère.

10. Moteur-fusée comprenant une tuyère à section de col variable selon la revendication 9.

## Patentansprüche

1. Vorrichtung zur Modulation eines Gasausstoßabschnitts (100), die dazu bestimmt ist, innerhalb einer Düse (12) eines Propellers oder Raketenmotors stromaufwärts des Halses (13) der Düse angeordnet zu werden, wobei die Modulationsvorrichtung ein Teilverschlusselement (111) des Düsenhalses (13), eine Steuerführung (112) des Verschlusselements (111), einen Hauptkolben (120) und einen Scharfschaltkolben (130) umfasst, wobei
die Steuerführung (112) mit dem stromaufwärts gelegenen Ende des Verschlusselements (111) verbunden ist, wobei die Steuerführung zwischen einer Einzugsposition und einer Verschlussposition beweglich ist,
der Scharfschaltkolben (130) in einem hohlen unteren Abschnitt (1200) des Hauptkolbens (120) untergebracht ist, wobei der Scharfschaltkolben zwischen einer Ruheposition, in der die Bewegung des Hauptkolbens (120) verriegelt ist, und einer Scharfschaltungsposition, in der die Bewegung des Hauptkolbens (120) entriegelt ist, beweglich ist, wobei sich der Scharfschaltkolben von der Ruheposition in die Scharfschaltungsposition bewegt, wenn der Druck auf die Rückseite des Scharfschaltkolbens einen ersten vorbestimmten Wert erreicht,
der Hauptkolben (120) zwischen einer ersten Position, in der die Bewegung der Steuerführung (112) des Verschlusselements (111) in der Einzugsposition verriegelt ist, und einer zweiten Position, in der die Bewegung der Steuerführung (112) des Verschlusselements (111) entriegelt ist, beweglich ist, wobei sich der Hauptkolben (120) von der ersten Position in die zweite Position bewegt, wenn sich der Scharfschaltkolben (130) in der Scharfschaltungsposition befindet und wenn der auf den Hauptkolben (120) ausgeübte Druck einen zweiten vorbestimmten Wert erreicht, der niedriger ist als der erste vorbestimmte Wert.

2. Vorrichtung gemäß Anspruch 1, **dadurch gekennzeichnet, dass** sie eine Rückstellfeder (131) zum Halten des Scharfschaltkolbens (130) in der Ruheposition umfasst, wobei die Rückstellfeder (131) eine bestimmte Steifigkeit aufweist, so dass die Feder sich zusammenzieht, wenn der Druck in der Modulationsvorrichtung den ersten vorbestimmten Wert erreicht.

3. Vorrichtung gemäß Anspruch 1 oder 2, **dadurch gekennzeichnet, dass** sie eine Schubfeder (122) umfasst, die gegen den Hauptkolben (120) zusammengedrückt gehalten wird, wobei die Schubfeder auf den Hauptkolben eine Schubkraft ausübt, die größer ist als die auf den Hauptkolben ausgeübte Druckkraft, wenn der Druck in der Modulationsvorrichtung den zweiten vorbestimmten Wert erreicht.

4. Vorrichtung gemäß einem der Ansprüche 1 bis 3, **dadurch gekennzeichnet, dass** sie eine oder mehrere Kugeln (132) umfasst, die um die Außenwand des Scharfschaltkolbens (130) angeordnet sind, wobei die Kugeln in einem Gehäuse (133) gehalten werden, das sich sowohl im Hauptkolben (120) als auch in einer den Hauptkolben umgebenden festen Hülle (121) erstreckt, wenn sich der Scharfschaltkolben (130) in der Ruheposition befindet, und dass der Scharfschaltkolben (130) einen oder mehrere Hohlräume (134) aufweist, die dazu ausgelegt sind, die Kugel oder Kugeln (132) teilweise aufzunehmen, wenn sich der Scharfschaltkolben in der Scharfschaltungsposition befindet, so dass die Bewegung des Hauptkolbens (120) entsperrt wird.

5. Vorrichtung gemäß einem der Ansprüche 1 bis 4, **dadurch gekennzeichnet, dass** sie eine oder mehrere Kugeln (123) umfasst, die um die Außenwand des Hauptkolbens (120) angeordnet sind, wobei die Kugeln in einem Gehäuse (124) gehalten werden, das sich sowohl in einer den Hauptkolben umgebenden festen Hülle (121) als auch in der Steuerführung (112) des Verschlusselements (111) erstreckt, wenn sich der Hauptkolben (120) in der ersten Position befindet, und dass der Hauptkolben (120) einen oder mehrere Hohlräume (125) aufweist, die dazu ausgelegt sind, die Kugel oder Kugeln (123) teilweise aufzunehmen, wenn sich der Hauptkolben in der zweiten Position befindet, so dass die Bewegung der Steuerführung (112) des Schließelements (111) entsperrt wird.

6. Vorrichtung gemäß einem der Ansprüche 1 bis 5, **dadurch gekennzeichnet, dass** der Hauptkolben (120) in der Lage ist, die Steuerführung (112) des Verschlusselements (111) in die Schließposition zu schieben, wenn sich der Scharfschaltkolben (130) in der Scharfschaltungsposition befindet und wenn der Druck in der Modulationsvorrichtung einen zweiten vorbestimmten Wert unterhalb des ersten vorbestimmten Wertes erreicht.

7. Vorrichtung gemäß einem der Ansprüche 1 bis 6, **dadurch gekennzeichnet, dass** die Steuerführung (112) des Verschlusselements (111) über eine Gleitverbindung an einer Hülle (121) des Hauptkolbens (120) befestigt ist.

8. Vorrichtung gemäß einem der Ansprüche 1 bis 7, **dadurch gekennzeichnet, dass** die Steuerführung (212) des Verschlusselements (211) über eine doppelgängige Schraubverbindung an einer Hülle (221) des Hauptkolbens (220) befestigt ist.

9. Düse mit variablem Halsabschnitt, umfassend einen Düsenhals (13) und einen divergenten Teil (14), **dadurch gekennzeichnet, dass** sie ferner eine Vorrichtung zur Modulation eines Gasausstoßabschnitts (100) gemäß einem der Ansprüche 1 bis 8 umfasst, wobei die Modulationsvorrichtung in der Düse stromaufwärts von dem Düsenhals angeordnet ist.

10. Raketenmotor, umfassend eine Düse mit variablem Halsabschnitt gemäß Anspruch 9.

## Claims

1. A modulator device (100) for modulating a gas ejection section, the device being for placing inside a nozzle (12) of a thruster or rocket engine upstream from the throat (13) of said nozzle, the modulator device having a shutter member (111) for partially shutting the nozzle throat (13), a control guide (112) for the shutter member (111), a main piston (120), and a primer piston (130),
the control guide (112) being connected to the upstream end of the shutter member (111), the control guide being movable between a retraction position;
the primer piston (130) being housed in a hollow lower part (1200) of the main piston (120), said primer piston being movable between a rest position in which it locks the main piston (120) against moving, and a priming position in which it unlocks movement of the main piston (120), said primer piston moving from the rest position to the priming position when the pressure exerted on the rear face of the primer piston reaches a first predetermined value; and
the main piston (120) being movable between a first position in which movement of the control guide (112) of the shutter member (111) is locked in the retraction position, and a second position in which movement of the control guide (112) of the shutter member (111) is unlocked, the main piston (120) moving from the first position to the second position when the primer piston (130) is in the priming position and when the pressure exerted on the main piston (120) reaches a second predetermined value less than the first predetermined value.

2. A device according to claim 1, **characterized in that** it includes a return spring (131) for holding the primer piston (130) in the rest position, the return spring (131) presenting stiffness determined in such a manner that said spring compresses when the pressure in the modulator device reaches the first predetermined value.

3. A device according to claim 1 or claim 2, **characterized in that** it includes a thrust spring (122) held in compression against the main piston (120), said thrust spring exerting on the main piston a thrust force that is greater than the pressure exerted on said main piston when the pressure in the modulator device reaches the second predetermined value.

4. A device according to any one of claims 1 to 3, **characterized in that** it includes one or more balls (132) placed around the outer wall of the primer piston (130), said balls being held in a hosing (133) extending both in the main piston (120) and in a stationary jacket (121) surrounding said main piston while the primer piston (130) is in the rest position, and **in that** the primer piston (130) includes one or more cavities (134) suitable for receiving the ball(s) (132) in part when said primer piston is in the priming position so as to unlock the movement of the main piston (120).

5. A device according to any one of claims 1 to 4, **characterized in that** it includes one or more balls (123) placed around the outer wall of the main piston (120), said balls being held in a housing (124) extending both in a stationary jacket (121) surrounding the main piston (120) and in the control guide (112) of the shutter member (111) when the main piston (120) is in the first position, and **in that** the main piston (120) includes one or more cavities (125) suitable for partially receiving the ball(s) (123) when said main piston is in the second position so as to unlock movement of the control guide (112) of the shutter member (111).

6. A device according to any one of claims 1 to 5, **characterized in that** the main piston (120) is suitable for pushing the control guide (112) of the shutter member (111) towards its shutting position when the primer piston (130) is in the priming position and when the pressure in the modulator device reaches a second predetermined value less than the first predetermined value.

7. A device according to any one of claims 1 to 6, **characterized in that** the control guide (112) of the shutter member (111) is mounted on a jacket (121) of the main piston (120) by a sliding connection.

8. A device according to any one of claims 1 to 7, **characterized in that** the control guide (212) of the shutter member (211) is mounted on a jacket (221) of the main piston (220) via a two-start screw connection.

9. A nozzle of variable throat section comprising a nozzle throat (13) and a diverging portion (14), the nozzle being **characterized in that** it further comprises a modulator device (100) according to any one of claims 1 to 8 for modulating a gas ejection section, said modulator device being placed in the nozzle upstream from said nozzle throat.

10. A rocket engine including a nozzle of variable throat section according to claim 9.
